# EUROPEAN PATENT SPECIFICATION

(11) **EP 3 146 756 B1**
(45) Date of publication and mention of the grant of the patent: **20.02.2019**
(21) Application number: 15806455.0
(22) Date of filing: 03.06.2015
(51) Int. Cl.: H04W 24/00, H04L 1/06, H04L 27/26, H04L 25/02, H04L 5/00

(54) **METHOD AND APPARATUS FOR OFDMA DATA TRANSMISSION**
VERFAHREN UND VORRICHTUNG ZUR OFDMA-DATENÜBERTRAGUNG
PROCÉDÉ ET APPAREIL POUR LA TRANSMISSION DE DONNÉES OFDMA

(30) Priority: 12.06.2014 US 201462011475 P; 03.07.2014 US 201462020902 P; 23.07.2014 US 201462028208 P; 22.05.2015 US 201514720680
(43) Date of publication of application: 29.03.2017
(73) Proprietor: Huawei Technologies Co., Ltd., Longgang Shenzhen, Guangdong 518129 (CN)
(72) Inventor: SUH, Jung Hoon, Kanata, Ontario K2W 0A8 (CA); ABOUL-MAGD, Osama, Kanata, Ontario K2M 2K2 (CA); BARBER, Phillip, Mckinney, TX 75071 (US)
(74) Representative: Körber, Martin Hans
(86) International application number: PCT/CN2015/080668
(87) International publication number: WO 2015/188717

(56) References cited:
- EP-A2- 2 357 773
- WO-A1-2012/006393
- WO-A1-2012/148488
- WO-A1-2013/169756
- WO-A2-2012/082306
- US-A1- 2011 013 532
- US-A1- 2012 189 085
- US-B1- 8 437 440
- US-B2- 8 737 189

## Description

### TECHNICAL FIELD

The present invention relates to a system and method for wireless communications, and, in particular embodiments, to a system and method for orthogonal frequency division multiple access (OFDMA) resource allocation.

### BACKGROUND

Institute of Electrical and Electronics Engineers (IEEE) 802.11ax High Efficiency Wireless local area networks (HEWs) are being developed to provide cost-efficient, high performance solutions for wireless Internet access. Like other IEEE 802.11 networks (e.g., IEEE 802.11ac), IEEE 802.11ax networks will likely use long training fields (LTFs) to provide channel estimation and payload data equalization. More specifically, an access point (AP) will map a long training sequence (LTS) to one or more LTFs using a precoding-matrix (P-matrix), and then insert the LTFs in the header of a frame. The AP will then transmit the frame to a station (STA), which performs channel estimation on the LTFs to decode payload data carried by the frame. Notably, the number of LTFs included in a frame is typically determined based on the number of space-time streams (STSs) carried in the frame.

WO 2012/148488 discloses a methods for transmitting data in a low power wireless networks.

### SUMMARY OF THE INVENTION

The invention made is disclosed in the independent claims attached. Further features are claimed in the attached set of dependent claims.

Technical advantages are generally achieved by embodiments of this disclosure which describes a system and method for OFDMA resource allocation.

In accordance with an embodiment, a method for transmitting data in a wireless communication system is provided. In this example, the method comprises generating a set of space-time streams for a station (STA). Institute of Electrical and Electronic Engineers (IEEE) technical standard (TS) 802.11ac requires one long training field for one space-time stream, two long training fields for two space-time streams, four long training fields for three or four space-time streams, six long training fields for five or six space-time streams, and eight long training fields for seven or eight space-time streams. The method further comprises generating a set of long training fields for the STA. The set of long training fields includes more long training fields than IEEE 802.11ac requires for the set of space-time streams. The method further comprises transmitting the set of long training fields and the set of space-time streams to the STA. The STA performs channel estimation on the set of long training fields to decode the set of space-time streams. An apparatus for performing this method is also provided.

In accordance with another embodiment, a method for transmitting data in a wireless communication system is provided. In this example, the method comprises generating space-time streams for orthogonal frequency division multiple access (OFDMA) scheduled stations (STAs). Different numbers of space-time streams are generated for at least some of the OFDMA scheduled STAs. The method further comprises generating long training fields for the OFDMA scheduled STAs such that the same number of long training fields is generated for each of the OFDMA scheduled STAs. The number of long training fields generated for each of the STAs is based on a highest number of long training fields generated for a single one of the OFDMA scheduled STAs having the most space-time streams. The method further comprises transmitting frames carrying the space-time streams and the long training fields to the OFDMA scheduled STAs. The long training fields are carried in long training field sections of the frames. The long training field sections are aligned in the time domain by virtue of the same number of long training fields having been generated for each of the OFDMA scheduled STAs. An apparatus for performing this method is also provided.

In accordance with yet another embodiment, a method for transmitting data in a wireless communication system is provided. In this example, the method comprises generating a first set of space-time streams and a first set of long training fields for the first STA. The first set of long training fields includes at least two more long training fields than space-time streams in the first set of space-time streams. The method further comprises transmitting the first set of long training fields and the first set of space-time streams to the first STA. The first STA performs channel estimation on the first set of long training fields to decode the first set of space-time streams. An apparatus for performing this method is also provided.

In accordance with yet another embodiment, a method for transmitting data in a wireless communication system is provided. In this example, the method comprises generating a first set of space-time streams for a first station (STA) and generating a first set of long training fields for the first STA. The first set of long training fields includes at least twice as many long training fields as space-time streams in the first set of space-time streams. The method further comprises transmitting the first set of long training fields and the first set of space-time streams to the first STA. The first STA performs channel estimation on the first set of long training fields to decode the first set of space-time streams. An apparatus for performing this method is also provided.

In accordance with yet another embodiment, a method for transmitting data in a wireless communication system is provided. In this example, the method comprises receiving a frame carrying a set of space-time streams and a set of long training fields. The set of long training fields includes at least two more long training fields than space-time streams in the set of space-time streams or the set of long training fields includes at twice as many long training fields as space-time streams in the set of space-time streams. The method further comprises performing channel estimation on the set of long training fields to obtain channel information and decoding the set of space-time streams in accordance with the channel estimation. An apparatus for performing this method is also provided.

### BRIEF DESCRIPTION OF THE DRAWINGS

For a more complete understanding of the present invention, and the advantages thereof, reference is now made to the following description taken in conjunction with the accompanying drawings, in which:
FIG. 1 illustrates a diagram of an embodiment wireless network;
FIG. 2 illustrates a diagram of a conventional IEEE 802.11 frame structure;
FIG. 3 illustrates a diagram of an embodiment IEEE 802.11 frame structure;
FIG. 4 illustrates a diagram of an embodiment OFDMA frame for aligning the LTF sections of OFDMA sub-frames in the time domain;
FIG. 5 illustrates simulation results of packet error rates (PERs) for different IEEE 802.11 frame structures;
FIG. 6 illustrates a flow chart of an embodiment method for transmitting a frame in IEEE 802.11ac networks;
FIG. 7 illustrates a flow chart of an embodiment method for transmitting a frame in an OFDMA network;
FIG. 8 illustrates a flow chart of another embodiment method for transmitting a frame in an OFDMA network;
FIG. 9 illustrates a flow chart of an embodiment method for receiving a frame;
FIG. 10 illustrates a diagram of an embodiment communications device; and
FIG. 11 illustrates a diagram of an embodiment computing platform.

Corresponding numerals and symbols in the different figures generally refer to corresponding parts unless otherwise indicated. The figures are drawn to clearly illustrate the relevant aspects of the embodiments and are not necessarily drawn to scale.

### DETAILED DESCRIPTION OF ILLUSTRATIVE EMBODIMENTS

The structure, manufacture and use of embodiments are discussed in detail below. It should be appreciated, however, that the present invention provides many applicable inventive concepts that can be embodied in a wide variety of specific contexts. The specific embodiments discussed are merely illustrative of specific ways to make and use the invention, and do not limit the scope of the invention. As discussed herein, beam-forming techniques (e.g., multiple input multiple output (MIMO)) are performed on a data stream to map the data stream onto multiple radio chains, which are then emitted over antenna elements.

In conventional IEEE 802.11 networks, the number of LTFs included in a frame is generally determined by the number of STS carried in the frame. More specifically, IEEE 802.11ac requires one LTF for frames carrying one STS, two LTFs for frames carrying two STSs, four LTFs for frames carrying three or four STSs, six LTFs for frames carrying five or six STSs, and eight LTFs for frames carrying seven or eight STSs. Aspects of this disclosure increase channel estimation performance by including more LTFs in a frame than required by IEEE 802.11ac for the number of STSs carried in the frame. For example, an AP may transmit at least two LTFs in a frame carrying one STS, at least three LTFs in a frame carrying two STSs, at least five LTFs in a frame carrying three or four STSs, and at least seven LTFs in a frame carrying five or six STSs. In such examples, these additional LTFs may provide improved channel estimation performance.

In one embodiment, the AP may generate at least two more LTFs than the number of STSs carried in the frame. For example, the AP may transmit at least four LTFs in a frame carrying two STSs, at least six LTFs in a frame carrying three STSs, and at least eight LTFs in a frame carrying four STSs. In such an embodiment, the AP may select a long training sequence (LTS) that includes at least two more LTF symbols than STSs carried in the frame, and then map the LTS to LTFs in accordance with a precoding matrix (P-matrix). In another embodiment, the AP may generate at least twice as many LTFs as STSs carried in the frame. For example, the AP may transmit at least two LTFs in a frame carrying one STS.

In some embodiments, multiple STAs may be scheduled to receive frames over a common OFDMA frequency, e.g., 20MHz frequency channel. Some of the STAs may receive frames carrying different numbers of STSs. In such embodiments, it may be desirable for LTF sections of the respective frames to align in the time domain. As such, the AP may generate LTFs for the OFDMA scheduled STAs such that the same number of LTFs is generated for each of the OFDMA scheduled STAs. The number of LTFs generated for each of the STAs may be based on a highest number of LTFs generated for a single one of the STAs, e.g., the STA that receives a frame carrying the highest number of STSs. Accordingly, LTF sections in the frame may be aligned in the time domain by virtue of the same number of LTFs having been generated for each of the STAs. These and other details are described in greater detail below.

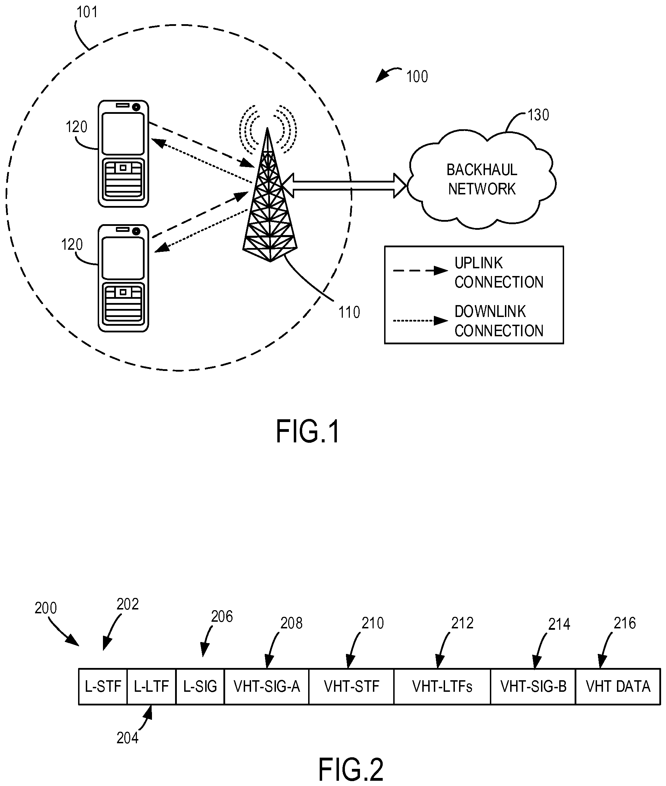

FIG. 1 illustrates a network 100 for communicating data. The network 100 includes an access point (AP) 110 having a coverage area 101, a plurality of mobile devices 120, and a backhaul network 130. The AP 110 may be any component capable of providing wireless access by, among other things, establishing uplink (dashed line) and/or downlink (dotted line) connections with the mobile devices 120, such as a base station, an evolved Node B (eNB), a femtocell, and other wirelessly enabled devices. The mobile devices 120 may be any component capable of establishing a wireless connection with the AP 110, such as a mobile station (STA), a user equipment (UE), or other wirelessly enabled devices. The backhaul network 130 may be any component or collection of components that allow data to be exchanged between the AP 110 and a remote end. In some embodiments, there may be multiple such networks, and/or the network may comprise various other wireless devices, such as relays, low power nodes, etc.

FIG. 2 illustrates a diagram of a conventional IEEE 802.11 frame structure 200. As shown, the frame structure 200 comprises a legacy short training field (L-STF) 202, a legacy long training field (L-LTF) 204, a legacy signaling (L-SIG) field 206, a first very high throughput (VHT) signaling (VHT-SIG-A) field 208, a VHT-STF 210, one or more VHT long training fields (VHT-LTFs) 212, a second VHT signaling (VHT-SIG-B) field 214, and a VHT data payload 216. The L-STF 202, the L-LTF 204, and the L-SIG field 206 may be part of a legacy preamble, and may provide backward compatibility with STAs operating in accordance with the legacy IEEE 802.11 protocols. The L-STF 202 may be used for automatic gain control (AGC), time synchronization, and frequency offset correction. The L-LTF 204 may be used for channel estimation. The L-SIG field 206 may carry frame information. The VHT-SIG-A field 208 may carry an identifier assigned to an AP and parameters for decoding the VHT-SIG-B field 214. The VHT-STF 210 may be used for AGC for multiple-input-multiple-output (MIMO) transmissions. The VHT-LTFs 212 may include up to 8 LTFs for channel estimation and equalizing the VHT data payload 216. The number of LTFs included in the VHT-LTFs 212 may be determined by the number of STSs carried in the VHT data payload 216. The VHT-SIG-B field 214 may carry resource allocation information for STAs receiving the VHT data payload 216. The VHT data payload 216 may carry user data for STAs in a cell.

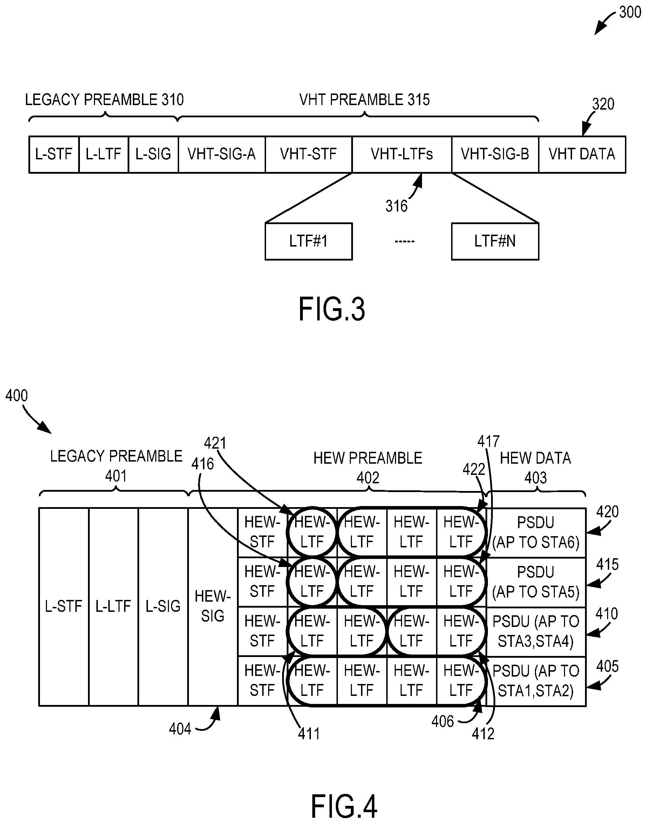

FIG. 3 is a diagram of an embodiment IEEE 802.11 frame structure 300. As shown, the frame structure 300 comprises a legacy preamble 310, a VHT preamble 315, and VHT data payload 320. The VHT preamble 315 may include multiple VHT-LTFs. The VHT payload 320 may carry multiple STSs to STAs in a cell. Channel estimation performance may be improved by including more VHT-LTFs in the frame than required by IEEE 802.11ac for the number of STSs carried in the frame. For example, an AP may transmit at least two VHT-LTFs 316 in a frame carrying one STS, at least three VHT-LTFs 316 in a frame carrying two STSs, at least five VHT-LTFs 316 in a frame carrying three or four STSs, at least seven VHT-LTFs 316 in a frame carrying five or six STSs, and at least nine VHT-LTFs 316 in a frame carrying seven or eight STSs. In one embodiment, the VHT-LTFs 316 may include at least two more VHT-LTFs than STSs carried in the frame. For example, the AP may transmit at least four VHT-LTFs 316 in a frame carrying two STSs and at least six VHT-LTF 316 in a frame carrying three or four STSs. In another embodiment, the AP may transmit at least twice as many VHT-LTFs 316 as STSs used to communication the frame. For example, the AP may transmit at least two VHT-LTFs 316 in a frame carrying one STS.

FIG. 4 is a diagram of an embodiment OFDMA frame 400 for aligning LTF sections of OFDMA sub-frames in the time domain. As shown, the embodiment OFDMA frame 400 comprises a plurality of OFDMA sub-frames 405, 410, 415, 420 communicated over different sub-channels. Each of the OFDMA sub-frames 405, 410, 415, 420 includes a legacy preamble 401, a HEW preamble 402, and HEW data region 403. The HEW data 403 may carry physical layer convergence protocol service data units (PSDUs) destined for one or more STAs.

The OFDMA sub-frames 405, 410, 415, 420 may be carry different numbers of STSs and in the HEW data region 403. In this example, the OFDMA sub-frame 405 carries two STSs for each of a first STA (STA-1) and a second STA (STA-2). The OFDMA sub-frame 410 carries one STS for each of a third STA (STA-3) and a fourth STA (STA-4). The OFDMA sub-frames 415, 420 each carry one STS to a fifth STA (STA-5) and a sixth STA (STA-6), respectively.

Notably, while the OFDMA sub-frames 405, 410, 415, 420 carry different numbers of STSs, they nevertheless include the same number of HEW-LTFs. More specifically, the number of HEW-LTFs carried in each OFDMA sub-frame is determined by the number of HEW-LTFs needed for the OFDMA sub-frame carrying the most STSs. In this example, the OFDMA sub-frame 405 carries the highest number of STSs (i.e., 4 STSs), and consequently the number of HEW-LTFs carried by the OFDMAs sub-frame 410, 415, 420 are determined based on the number of HEW-LTFs needed for the OFDMA sub-frame 405 (i.e., 4 HEW-LTFs). Put differently, IEEE 802.11ac requires four HEW-LTFs 406 to communicate the OFDMA sub-frame 405 carrying four STSs, two HEW-LTFs 411 to communicate the OFDMA sub-frame 410 carrying two STSs, one HEW-LTF 416 to communicate the OFDMA sub-frame 405 carrying one STS, and one HEW-LTF 421 to communicate the OFDMA sub-frame 420 carrying one STS. The embodiment frame format provided herein includes two additional HEW-LTFs 412 in the OFDMA sub-frame 410, and three additional HEW-LTFs 417, 422 in each of the OFDMA sub-frames 415, 420 so that the LTF sections of the OFDMA sub-frames 410, 415, 420 align with the LTF section of the OFDMA sub-frame 405. Accordingly, LTF sections in the OFDMA sub-frames 405, 410, 415, 420 may be aligned in the time domain by virtue of the same number of LTFs having been generated for each of the OFDMA sub-frames. Advantageously, the additional HEW-LTFs 412, 417, 422 carried by the OFDMA sub-frames 410, 415, 420 provide for improved channel estimation upon reception.

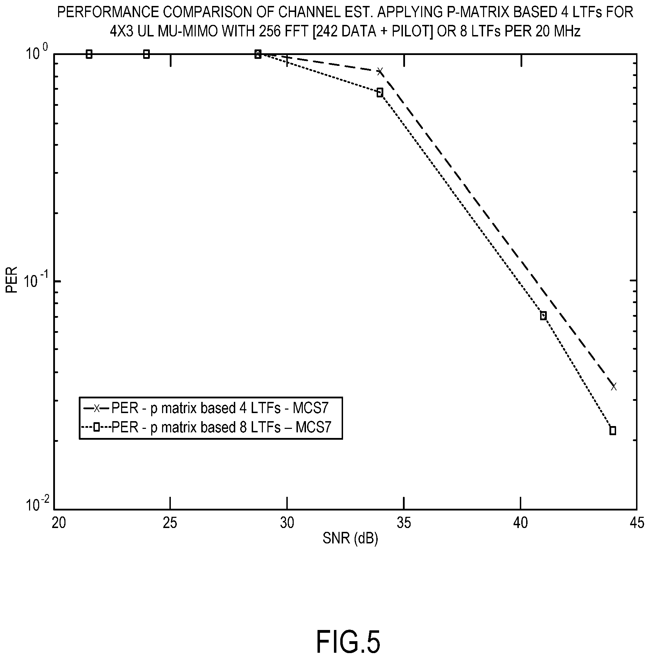

FIG. 5 illustrates simulation results of packet error rates (PERs) 500 for different IEEE 802.11 frame structures. In this example, the simulation was performed for an uplink (UL) MU-MIMO system with 3 STAs. The AP transmits a single STS using one transmit (Tx) antenna over an IEEE channel D environment. As shown, the same uplink MU-MIMO system with 8 LTFs shows a 1.5 dB gain over the uplink MU-MIMO with 4 LTFs over a 20MHz frequency channel per 256FFT (e.g. 242 data tones and pilot tones) adopting the MCS level 7.

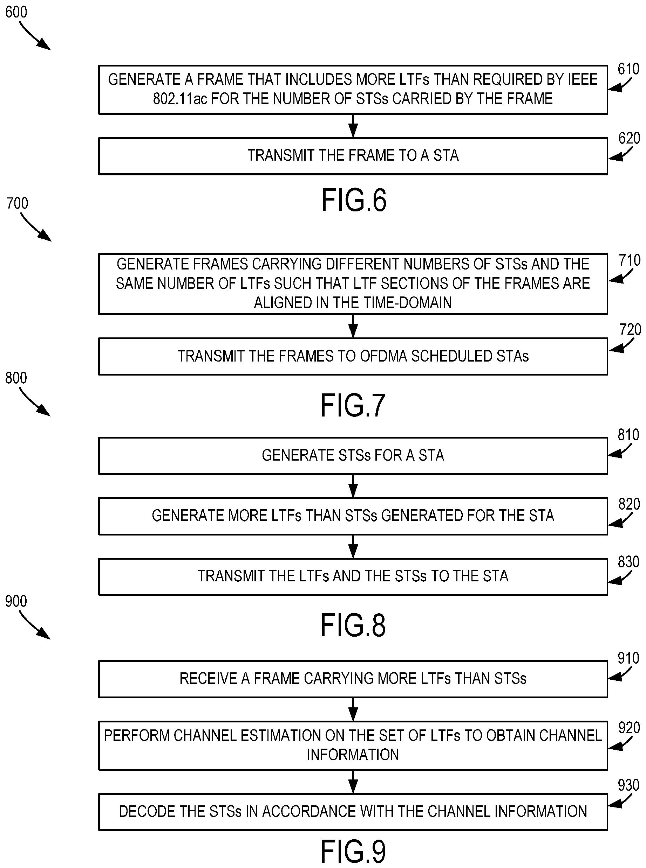

FIG. 6 is a flow chart of an embodiment method 600 for transmitting a frame in an IEEE 802.11ac network. As shown, the method 600 begins at step 610, where an AP generates a frame that includes more LTFs than required by IEEE 802.11ac for the number of STSs carried in the frame. Thereafter, the method 600 proceeds to step 620, where the AP transmits the frame to a STA, which performs channel estimation on the LTFs to decode the STSs.

FIG. 7 is a flow chart of an embodiment method 700 for transmitting a frame in an OFDMA network. As shown, the method 700 begins at step 710, where an AP generates frames for OFDMA scheduled STAs. The frames include LTFs for the OFDMA scheduled STAs. The number of LTFs generated for each of the STAs is based on a highest number of LTFs generated for a single one of the OFDMA scheduled STAs. Next, the method 700 proceeds to step 720, where the AP transmits the frames including the LTFs to the OFDMA scheduled STAs. The LTF sections in the frame are aligned in the time domain by virtue of the same number of LTFs having been generated for each of the OFDMA scheduled STAs.

FIG. 8 is a flow chart of an embodiment method 800 for transmitting a frame in an OFDMA network. As shown, the method 800 begins at step 810, where an AP generates multiple STSs for a STA. Subsequently, the method 800 proceeds to step 820, where the AP generates more LTFs than STSs generated for the STA. In one embodiment, the AP generates at least two more LTFs than STSs generated for the STA. In another embodiment, the AP generates at least twice as many LTFs as STSs generated for the STA. Finally, the method 800 proceeds to step 830, where the AP transmits the frame including the LTFs and the STSs to the STA. The STA performs channel estimation on the LTFs to decode the STSs.

FIG. 9 is a flow chart of an embodiment method 900 for receiving a frame. As shown, the method 900 begins at step 910, where an STA receives a frame carrying more LTFs than required for the number of STS carried in the frame. In one embodiment, the frame includes at least two more LTFs than STSs. In another embodiment, the frame includes at least twice as many LTFs as STSs. Subsequently, the method 900 proceeds to step 920, where the STA performs channel estimation on the LTFs to obtain channel information. Finally, the method 900 proceeds to step 930, where the STA decodes the STSs in accordance with the channel estimation.

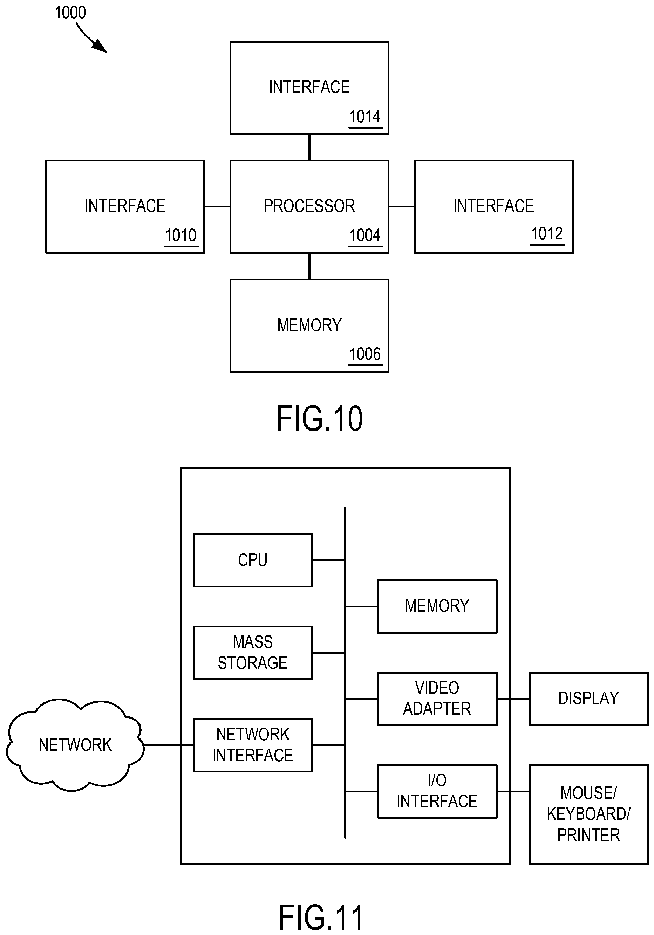

FIG. 10 is a block diagram of an embodiment communications device 1000, which may be equivalent to one or more devices (e.g., requesting devices, candidate devices, network nodes, etc.) discussed above. The communications device 1000 may include a processor 1004, a memory 1006, and a plurality of interfaces 1010, 1012, 1014, which may (or may not) be arranged as shown in FIG. 10. The processor 1004 may be any component capable of performing computations and/or other processing related tasks, and the memory 1006 may be any component capable of storing programming and/or instructions for the processor 1004. The interfaces 1010, 1012, 1014 may be any component or collection of components that allows the communications device 1000 to communicate with other devices, and may include wireless interfaces and/or wireline interfaces for communicating over radio interfaces, backhaul interfaces, control channels, etc.

FIG. 11 is a block diagram of a processing system that may be used for implementing the devices and methods disclosed herein. Specific devices may utilize all of the components shown, or only a subset of the components, and levels of integration may vary from device to device. Furthermore, a device may contain multiple instances of a component, such as multiple processing units, processors, memories, transmitters, receivers, etc. The processing system may comprise a processing unit equipped with one or more input/output devices, such as a speaker, microphone, mouse, touchscreen, keypad, keyboard, printer, display, and the like. The processing unit may include a central processing unit (CPU), memory, a mass storage device, a video adapter, and an I/O interface connected to a bus.

The bus may be one or more of any type of several bus architectures including a memory bus or memory controller, a peripheral bus, video bus, or the like. The CPU may comprise any type of electronic data processor. The memory may comprise any type of non-transitory system memory such as static random access memory (SRAM), dynamic random access memory (DRAM), synchronous DRAM (SDRAM), read-only memory (ROM), a combination thereof, or the like. In an embodiment, the memory may include ROM for use at boot-up, and DRAM for program and data storage for use while executing programs.

The mass storage device may comprise any type of non-transitory storage device configured to store data, programs, and other information and to make the data, programs, and other information accessible via the bus. The mass storage device may comprise, for example, one or more of a solid state drive, hard disk drive, a magnetic disk drive, an optical disk drive, or the like.

The video adapter and the I/O interface provide interfaces to couple external input and output devices to the processing unit. As illustrated, examples of input and output devices include the display coupled to the video adapter and the mouse/keyboard/printer coupled to the I/O interface. Other devices may be coupled to the processing unit, and additional or fewer interface cards may be utilized. For example, a serial interface such as Universal Serial Bus (USB) (not shown) may be used to provide an interface for a printer.

The processing unit also includes one or more network interfaces, which may comprise wired links, such as an Ethernet cable or the like, and/or wireless links to access nodes or different networks. The network interface allows the processing unit to communicate with remote units via the networks. For example, the network interface may provide wireless communication via one or more transmitters/transmit antennas and one or more receivers/receive antennas. In an embodiment, the processing unit is coupled to a local-area network or a wide-area network for data processing and communications with remote devices, such as other processing units, the Internet, remote storage facilities, or the like.

While this invention has been described with reference to illustrative embodiments, this description is not intended to be construed in a limiting sense. Various modifications and combinations of the illustrative embodiments, as well as other embodiments of the invention, will be apparent to persons skilled in the art upon reference to the description. It is therefore intended that the appended claims encompass any such modifications or embodiments.

## Claims

1. A method for transmitting data in a wireless communication system, the method comprising:
generating (710): a first set of space-time streams for a first station, STA; and a second set of space-time streams for a second STA;
generating (710): a first set of long training fields for the first STA, wherein the first set of long training fields includes at least two more long training fields than space-time streams in the first set of space-time streams; and a second set of long training fields for the second STA, wherein the second set of space-time streams includes more space-time streams than the first set of space-time streams, wherein the second set of long training fields includes the same number of long training fields as the first set of long training fields; and
transmitting (720) the first set of long training fields and the first set of space-time streams to the first STA; and the second set of long training fields and the second set of space-time streams to the second STA, wherein the first set of long training fields and the second set of long training fields are transported in orthogonal frequency division multiple access, OFDMA, long training field sections that are aligned in the time domain.

2. The method of claim 1, wherein the first set of long training fields includes at least twice as many long training fields as space-time streams in the first set of space-time streams.

3. An access point comprising:
a processor (1004); and
a computer readable storage medium (1006) storing programming for execution by the processor, the programming including instructions to:
generating a first set of space-time streams for a first station, STA; and a second set of space-time streams for a second STA;
generating a first set of long training fields for the first STA, wherein the first set of long training fields includes at least two more long training fields than space-time streams in the first set of space-time streams; and a second set of long training fields for the second STA, wherein the second set of space-time streams includes more space-time streams than the first set of space-time streams, wherein the second set of long training fields includes the same number of long training fields as the first set of long training fields; and
transmitting the first set of long training fields and the first set of space-time streams to the first STA; and the second set of long training fields and the second set of space-time streams to the second STA, wherein the first set of long training fields and the second set of long training fields are transported in orthogonal frequency division multiple access, OFDMA, long training field sections that are aligned in the time domain.

4. The access point of claim 3, wherein the first set of long training fields includes at least twice as many long training fields as space-time streams in the first set of space-time streams.

5. A method for transmitting data in a wireless communication system, the method comprising:
receiving (910): by a first station, STA, a frame carrying a first set of space-time streams and a first set of long training fields, wherein the first set of long training fields includes at least two more long training fields than space-time streams in the first set of space-time streams; by a second STA, a frame carrying a second set of space-time streams and a second set of long training fields, wherein the second set of space-time streams includes more space-time streams than the first set of space-time streams, wherein the second set of long training fields includes the same number of long training fields as the first set of long training fields, wherein the first set of long training fields and the second set of long training fields are transported in orthogonal frequency division multiple access, OFDMA, long training field sections that are aligned in the time domain;
performing (920) channel estimation on the set of long training fields to obtain channel information; and
decoding (930) the set of space-time streams in accordance with the channel estimation.

6. The method of claim 5, wherein the set of long training fields includes at least twice as many long training fields as space-time streams in the set of space-time streams.

## Patentansprüche

1. Verfahren zum Übertragen von Daten in einem drahtlosen Kommunikationssystem, das Verfahren umfassend:
Erzeugung (710): eines ersten Satzes Raum-Zeit-Streams für eine erste Station, STA;
und eines zweiten Satzes Raum-Zeit-Streams für eine zweite STA;
Erzeugung (710): eines ersten Satzes langer Schulungsfelder für die erste STA, wobei der erste Satz langer Schulungsfelder mindestens zwei lange Schulungsfelder mehr als die Raum-Zeit-Streams in dem ersten Satz Raum-Zeit-Streams enthält; und
eines zweiten Satzes langer Schulungsfelder für die zweite STA, wobei der zweite Satz Raum-Zeit-Streams mehr Raum-Zeit-Streams als der erste Satz Raum-Zeit-Streams enthält, wobei der zweite Satz langer Schulungsfelder dieselbe Anzahl langer Schulungsfelder wie der erste Satz langer Schulungsfelder enthält; und
Übertragung (720) des ersten Satzes langer Schulungsfelder und des ersten Satzes Raum-Zeit-Streams an die erste STA; und des zweiten Satzes langer Schulungsfelder und des zweiten Satzes Raum-Zeit-Streams an die zweite STA, wobei der erste Satz langer Schulungsfelder und der zweite Satz langer Schulungsfelder in langen Orthogonal-Frequency-Divison-Multiple-Access-, OFDMA, Schulungsfeldabschnitten transportiert werden, die in der Zeitdomäne ausgerichtet sind.

2. Verfahren nach Anspruch 1, wobei der erste Satz langer Schulungsfelder mindestens zweimal so viele lange Schulungsfelder wie Raum-Zeit-Streams in dem ersten Satz Raum-Zeit-Streams enthält.

3. Ein Zugangspunkt, umfassend:
einen Prozessor (1004); und
ein computerlesbares Speichermedium (1006), das die Programmierung zur Ausführung durch den Prozessor speichert, wobei die Programmierung Anweisungen umfasst zur:
Erzeugung eines ersten Satzes Raum-Zeit-Streams für eine erste Station, STA; und
eines zweiten Satzes Raum-Zeit-Streams für eine zweite STA;
Erzeugung eines ersten Satzes langer Schulungsfelder für die erste STA, wobei der erste Satz langer Schulungsfelder mindestens zwei lange Schulungsfelder mehr als die Raum-Zeit-Streams in dem ersten Satz Raum-Zeit-Streams enthält; und eines zweiten Satzes langer Schulungsfelder für die zweite STA, wobei der zweite Satz Raum-Zeit-Streams mehr Raum-Zeit-Streams als der erste Satz Raum-Zeit-Streams enthält, wobei der zweite Satz langer Schulungsfelder dieselbe Anzahl langer Schulungsfelder wie der erste Satz langer Schulungsfelder enthält; und
Übertragung des ersten Satzes langer Schulungsfelder und des ersten Satzes Raum-Zeit-Streams an die erste STA; und des zweiten Satzes langer Schulungsfelder und des zweiten Satzes Raum-Zeit-Streams an die zweite STA, wobei der erste Satz langer Schulungsfelder und der zweite Satz langer Schulungsfelder in langen Orthogonal-Frequency-Divison-Multiple-Access, OFDMA, Schulungsfeldabschnitten transportiert werden, die in der Zeitdomäne ausgerichtet sind.

4. Zugangspunkt nach Anspruch 3, wobei der erste Satz langer Schulungsfelder mindestens zweimal so viele lange Schulungsfelder wie Raum-Zeit-Streams in dem ersten Satz Raum-Zeit-Streams enthält.

5. Verfahren zum Übertragen von Daten in einem drahtlosen Kommunikationssystem, das Verfahren umfassend:
Empfang (910): eines Rahmens, der einen ersten Satz Raum-Zeit-Streams und einen ersten Satz langer Schulungsfelder trägt, durch eine erste Station, STA, wobei der erste Satz langer Schulungsfelder mindestens zwei lange Schulungsfelder mehr als die Raum-Zeit-Streams in dem ersten Satz Raum-Zeit-Streams enthält; eines Rahmens, der einen zweiten Satz Raum-Zeit-Streams und einen zweiten Satz langer Schulungsfelder trägt, durch eine zweite STA, wobei der zweite Satz Raum-Zeit-Streams mehr Raum-Zeit-Streams als der erste Satz Raum-Zeit-Streams enthält, wobei der zweite Satz langer Schulungsfelder dieselbe Anzahl langer Schulungsfelder wie der erste Satz langer Schulungsfelder enthält, wobei der erste Satz langer Schulungsfelder und der zweiten Satz langer Schulungsfelder in langen Orthogonal-Frequency-Division-Multiple-Access, OFDMA, Schulungsfeldabschnitten transportiert werden, die in der Zeitdomäne ausgerichtet sind;
Ausführung (920) der Kanalschätzung auf den Satz langer Schulungsfelder zum Beschaffen der Kanalinformation; und
Decodierung (930) des Satzes Raum-Zeit-Streams nach der Kanalschätzung.

6. Verfahren nach Anspruch 5, wobei der Satz langer Schulungsfelder mindestens zweimal so viele lange Schulungsfelder wie Raum-Zeit-Streams in dem Satz Raum-Zeit-Streams enthält.

## Revendications

1. Procédé pour transmettre des données dans un système de communication sans fil, le procédé consistant :
à générer (710) : un premier ensemble de flux espace-temps pour une première station (STA) ; et un second ensemble de flux espace-temps pour une seconde station ;
à générer (710) : un premier ensemble de champs d'apprentissage longs pour la première station, dans lequel le premier ensemble de champs d'apprentissage longs comprend au moins deux champs d'apprentissage plus longs que des flux espace-temps dans le premier ensemble de flux espace-temps ; et un second ensemble de champs d'apprentissage longs pour la seconde station, dans lequel le second ensemble de flux espace-temps comprend davantage de flux espace-temps que le premier ensemble de flux espace-temps, dans lequel le second ensemble de champs d'apprentissage longs comprend le même nombre de champs d'apprentissage longs que le premier ensemble de champs d'apprentissage longs ; et
à transmettre (720) le premier ensemble de champs d'apprentissage longs et le premier ensemble de flux espace-temps à la première station ; et le second ensemble de champs d'apprentissage longs et le second ensemble de flux espace-temps à la seconde station, dans lequel le premier ensemble de champs d'apprentissage longs et le second ensemble de champs d'apprentissage longs sont transportés dans des sections de champ d'apprentissage long à accès multiple par répartition en fréquence orthogonale (OFDMA) qui sont alignées dans le domaine temporel.

2. Procédé selon la revendication 1, dans lequel le premier ensemble de champs d'apprentissage longs comprend des champs d'apprentissage au moins deux fois plus longs que des flux espace-temps dans le premier ensemble de flux espace-temps.

3. Point d'accès comprenant :
un processeur (1004) ; et
un support de stockage lisible par ordinateur (1006) stockant une programmation pour une exécution par le processeur, la programmation comprenant des instructions :
pour générer un premier ensemble de flux espace-temps pour une première station (STA) ; et un second ensemble de flux espace-temps pour une seconde station ;
pour générer un premier ensemble de champs d'apprentissage longs pour la première station, dans lequel le premier ensemble de champs d'apprentissage longs comprend au moins deux champs d'apprentissage plus longs que des flux espace-temps dans le premier ensemble de flux espace-temps ; et un second ensemble de champs d'apprentissage longs pour la seconde station, dans lequel le second ensemble de flux espace-temps comprend davantage de flux espace-temps que le premier ensemble de flux espace-temps, dans lequel le second ensemble de champs d'apprentissage longs comprend le même nombre de champs d'apprentissage longs que le premier ensemble de champs d'apprentissage longs ; et
pour transmettre le premier ensemble de champs d'apprentissage longs et le premier ensemble de flux espace-temps à la première station ; et le second ensemble de champs d'apprentissage longs et le second ensemble de flux espace-temps à la seconde station, dans lequel le premier ensemble de champs d'apprentissage longs et le second ensemble de champs d'apprentissage longs sont transportés dans des sections de champ d'apprentissage long à accès multiple par répartition en fréquence orthogonale (OFDMA) qui sont alignées dans le domaine temporel.

4. Point d'accès selon la revendication 3, dans lequel le premier ensemble de champs d'apprentissage longs comprend des champs d'apprentissage au moins deux fois plus longs que des flux espace-temps dans le premier ensemble de flux espace-temps.

5. Procédé pour transmettre des données dans un système de communication sans fil, le procédé consistant :
à recevoir (910) : au moyen d'une première station (STA), une trame comportant un premier ensemble de flux espace-temps et un premier ensemble de champs d'apprentissage longs, dans lequel le premier ensemble de champs d'apprentissage longs comprend au moins deux champs d'apprentissage plus longs que des flux espace-temps dans le premier ensemble de flux espace-temps ; au moyen d'une seconde station, une trame comportant un second ensemble de flux espace-temps et un second ensemble de champs d'apprentissage longs, dans lequel le second ensemble de champs d'apprentissage longs comprend davantage de flux espace-temps que le premier ensemble de flux espace-temps, dans lequel le second ensemble de champs d'apprentissage longs comprend le même nombre de champs d'apprentissage longs que le premier ensemble de champs d'apprentissage longs, dans lequel le premier ensemble de champs d'apprentissage longs et le second ensemble de champs d'apprentissage longs sont transportés dans des sections de champ d'apprentissage long à accès multiple par répartition en fréquence orthogonale (OFDMA) qui sont alignées dans le domaine temporel ;
à effectuer (920) une estimation de canal sur l'ensemble de champs d'apprentissage longs pour obtenir des informations de canal ; et
à décoder (930) l'ensemble de flux espace-temps en fonction de l'estimation de canal.

6. Procédé selon la revendication 5, dans lequel l'ensemble de champs d'apprentissage longs comprend des champs d'apprentissage au moins deux fois plus longs que des flux espace-temps dans l'ensemble de flux espace-temps.
